(19) **Europäisches Patentamt**
**European Patent Office**
**Office européen des brevets**

(11) **EP 3 961 425 B1**

(12) **EUROPEAN PATENT SPECIFICATION**

(45) Date of publication and mention
of the grant of the patent:
**26.11.2025  Bulletin 2025/48**

(21) Application number: **20193364.5**

(22) Date of filing: **28.08.2020**

(51) International Patent Classification (IPC):
**G06F 16/353** (2025.01)     **G06V 10/44** (2022.01)

(52) Cooperative Patent Classification (CPC):
**G06F 16/353; G06V 10/454; G06V 30/414;**
**G06V 30/422;** G06V 10/426

(54) **SYSTEM AND METHOD FOR PROVIDING ACCESS TO MULTIMODAL CONTENT IN A TECHNICAL DOCUMENT**

SYSTEM UND VERFAHREN ZUR BEREITSTELLUNG EINES ZUGRIFFS AUF MULTIMODALEN INHALT IN EINEM TECHNISCHEN DOKUMENT

SYSTÈME ET PROCÉDÉ POUR FOURNIR UN ACCÈS À UN CONTENU MULTIMODAL DANS UN DOCUMENT TECHNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.03.2022   Bulletin 2022/09**

(73) Proprietor: **Siemens Aktiengesellschaft**
**80333 München (DE)**

(72) Inventors:
• **GARG, Karan**
**122001 Gurgaon, Haryana (IN)**
• **KHAN, Mohammad Hamzah**
**324005 Kota, Rajasthan (IN)**
• **MAIGUR, Manjunath**
**586101 Vijayapura, Karnataka (IN)**
• **DALMIA, Aman**
**700020 Kolkata, Kolkata (IN)**
• **PRAHARAJ, Amlan**
**560100 Bangalore, Karnataka (IN)**
• **KARKADA SURESH, Suhas**
**560085 Bangalore, Karnataka (IN)**
• **KULKARNI, Srinidhi**
**560092 Bangalore, Karnataka (IN)**

(74) Representative: **Patentanwaltskanzlei WILHELM & BECK**
**Prinzenstraße 13**
**80639 München (DE)**

(56) References cited:
**US-A1- 2010 293 451     US-A1- 2016 364 608**
**US-A1- 2020 160 050**

• **LIH-SHING KUNG ET AL: "A PROCEDURE OF READING MECHANICAL ENGINEERING DRAWINGS FOR CAD APPLICATIONS", SIGNAL PROCESSING, ELSEVIER SCIENCE PUBLISHERS B.V. AMSTERDAM, NL, vol. 32, no. 1/02, 1 May 1993 (1993-05-01), pages 191 - 200, XP000435731, ISSN: 0165-1684, DOI: 10.1016/0165-1684(93)90042-9**
• **DOV DORI: "A SYNTACTIC/GEOMETRIC APPROACH TO RECOGNITION OF DIMENSIONS IN ENGINEERING MACHINE DRAWINGS", COMPUTER VISION GRAPHICS AND IMAGE PROCESSING, ACADEMIC PRESS, DULUTH, MA, US, vol. 47, no. 3, 1 September 1989 (1989-09-01), pages 271 - 291, XP000104182, DOI: 10.1016/0734-189X(89)90114-X**

**Description**

The present invention relates to a field of knowledge management, and more particularly relates to a system, apparatus and method for providing access to multimodal content in a technical document.

Technical documents exist in various forms such as service manuals, service reports, drawing sheets, specifications, catalogs etc. Each such technical document comprises various forms of information, for example, in the form of text, drawings, tabular column, mathematical expressions and so on. It is often helpful to build a knowledge base by collating the information from such technical documents for easier reference later on. Typically, a person has to manually review each of the technical documents to deduce useful information. The useful information thus deduced is further used to manually create a knowledge base. Furthermore, technical documents in hard copy form are typically scanned and stored in non-searchable formats. Currently, Optical Character Recognition (OCR) is used to convert non-searchable documents to searchable documents. However, the OCR models known today are capable of extracting only text content from a given document and fails to extract any other category of content that may be present in the document. Typically, technical documents comprise crucial information depicted using multimodal content in the form of tables, drawings and mathematical expressions, in addition to text. As a result, use of OCR models for extraction of contents from non-searchable documents may not be feasible and may also lead to loss of information in certain cases. Due to the above-mentioned reasons, extensive human efforts and time are required in building a knowledge base from technical documents.

US 2020/160050 A1 discloses a system and a method for performing processing on complex documents, comprising receipts, invoices, etc. and provide results of the performed analysis to users. A request is received to analyze said document. Afterward the content of the document is split into multiple portions and one or more segment types are identified using one or more machine learning (ML) models. A location (via a bounding box) of the classified content in the document is determined. Based on the determined segment type, a specific ML trained model is used to extract data from the respective segment. A representation for the extracted data is generated and stored as a database entry or set of entries. Based on the results a response is output to a client device.

LIH-SHING KUNG ET AL: "A PROCEDURE OF READING MECHANICAL ENGINEERING DRAWINGS FOR CAD APPLICATIONS", SIGNAL PROCESSING, ELSEVIER SCIENCE PUBLISHERS B.V. AMSTERDAM, NL, vol. 32, no. 1/02, 1 May 1993 (1993-05-01), pages 191-200, describes a method to redraw mechanical engineering drawings from scans. The scan image is decomposed into squares of maximal size by a maximal square moving algorithm. Then, the object contour of the drawing is detected and isolated by a graph-theoretical algorithm based on a minimal spanning tree. Finally, the geometric primitives are extracted from the isolated object contour and converted into IGES format which is understood by most CAD systems. The method can be part of a dimension recognition program as described in DOV DORI: "A SYNTACTIC/GEOMETRIC APPROACH TO RECOGNITION OF DIMENSIONS IN ENGINEERING MACHINE DRAWINGS", COMPUTER VISION GRAPHICS AND IMAGE PROCESSING, ACADEMIC PRESS, DULUTH, MA, US, vol. 47, no. 3, 1 September 1989 (1989-09-01), pages 271-291.

In light of the above, there exists a need for a mechanism for a system, apparatus, and method for providing access to multimodal content present in technical documents.

Therefore, it is an object of the present invention to provide a system, apparatus, and method for providing access to multimodal content present in various technical documents. The invention is defined by the independent claims. Embodiments are described in the subclaims.

The method comprises receiving, by a processing unit, a request for providing access to multimodal content in a technical document from a source. The source may be one or more of a client device, a database, or a server. Further, the data may be one of structured data and unstructured data. The technical document is in one of a searchable format and a non-searchable format. Specifically, searchable formats allow a user to search through the document for specific text with the help of keywords. Non-limiting examples of searchable formats include knowledge models, searchable PDFs, emails, Word, Excel and HTML. On the contrary, non-searchable formats include Portable Document Formats (PDFs), Portable Network Graphics (PNG) format, Joint Photographic Experts Group (JPEG) format, JPG, and other image formats. In one example, the technical document may be a scanned image of a hard copy. Non-limiting examples of technical documents include service reports, product catalogs, product manuals and design specifications. In an embodiment, receiving the request for providing access to the multimodal content in the technical document includes receiving the technical document as an input from the source. Advantageously, the present invention enables extraction of multimodal content from searchable as well as non-searchable documents.

The method further comprises classifying the multimodal content in the technical document into one or more pre-defined categories using one or more machine learning models. In one embodiment, the pre-defined categories include at least one of text, tabular column, mathematical expressions and engineering drawings. In one embodiment, classifying the multimodal content in the technical document into one or more pre-defined categories using the one or more machine learning models comprises parsing the technical document using the one or more machine learning models.

Each of the one or more machine learning model is trained to perform a certain function. In particular, by training based on training data, the machine learning model is able to adapt to new circumstances and to detect and extrapolate patterns. In general, parameters of the machine learning model may be adapted by means of training. In particular, supervised training, semi-supervised training, unsupervised training, reinforcement learning and/or active learning may be used. Furthermore, feature learning may be used. In particular, the parameters of the machine learning model may be adapted iteratively by several steps of training. In particular, a machine learning model may comprise a neural network, a support vector machine, a decision tree and/or a Bayesian network, and/or the machine learning model may be based on k-means clustering, Q learning, genetic algorithms and/or association rules.

In particular, a neural network may be a deep neural network, a convolutional neural network or a convolutional deep neural network or variations thereof. Furthermore, a neural network may be an adversarial network, a deep adversarial network and/or a generative adversarial network. During parsing the technical document is provided as input to the one or more machine learning models. Specifically, each of the machine learning models may be trained to identify a pre-defined category of multimodal content. Each of the machine learning models identify a region of interest corresponding to the pre-defined category of multimodal content. The term 'region of interest' as used herein, refers to a collection of pixels in the technical document that represent the multimodal content of a specific pre-defined category. For example, if the pre-defined category is a tabular column, the region of interest includes pixels of the technical document that represent tabular columns. The regions of interest may be identified as a plurality of pixel values or offset values representing the region of interest.

The method comprises determining a location of the classified multimodal content in the technical document. In an embodiment, determining the location of the classified multimodal content comprises generating bounding boxes around one or more entities associated with the classified multimodal content in the technical document based on an output of the machine learning model. The term 'bounding box' refers to a visible identification of a region of interest. Further, the cells may comprise different contents such as text and mathematical expressions.

The method comprises extracting the classified multimodal content from the determined location in the technical document using one or more trained functions. Each of the trained functions corresponds to a specific category of the multimodal content being extracted. The term 'trained function' as used herein refers to functions that are suitably adapted for performing one or more operations on the classified multimodal content. The functions may include, for example, linear models, machine learning models, classification models, image segmentation models etc. In an embodiment, extracting the classified multimodal content from the determined location in the technical document using the one or more trained functions comprises selecting, from a plurality of trained functions, the one or more trained functions capable of extracting the one or more entities associated with the classified multimodal content.

The classified multimodal content comprises a tabular column. Further, extracting the classified multimodal content from the technical document comprises identifying cells of the tabular column using a contour detection algorithm. Further, the cells of the tabular column are classified into one of formula and text using the one or more trained functions. In an example, the one or more trained functions include a trained classification model. Further, the one or more entities are extracted from the tabular column using predefined functions based on the classification of the cells. The predefined functions include, but are not limited to, morphological operations, threshold operations, contour detection algorithms and optical character recognition. In an embodiment, each of the extracted entities represents information in a cell in the tabular column.

The classified multimodal content is an engineering drawing comprising orthographic views and non-graphic information. Further, extracting the classified multimodal content from the determined location in the technical document comprises identifying non-graphic information associated with the engineering drawings using the one or more trained functions. Examples of non-graphic information include, but are not limited to, dimension text, radius values, diameter values, angles, title of the drawing and arrowheads. Further, the one or more entities corresponding to the non-graphic information are extracted from the technical document based on predefined rules. In an embodiment, the method further comprises segregating the orthographic views from the non-graphic information using the one or more trained functions. Further, the one or more entities representing the orthographic views are extracted from the technical document using a contour detection algorithm. In another embodiment, the multimodal content comprises at least one of text and mathematical expressions, and extracting the identified multimodal content from the technical document comprises applying one or more natural language processing techniques for tagging the entities.

Advantageously, the present invention facilitates extracting information from technical documents comprising multimodal content, as opposed to conventional knowledge extraction techniques which extract only textual content.

The method comprises representing the extracted multimodal content in a searchable format. In an embodiment, in representing the extracted multimodal content in the searchable format, the method comprises determining relationships between the extracted one or more entities based on one or more properties of the entities. The term 'relationship' as used herein refers to an association between the entities. The association is determined based on predefined rules corresponding to the specific category of multimodal content associated with the entities. For example, the predefined rules association may also be determined based on other factors such as a relative position of the entities within the technical document, commonalities between the entities, nature of the entities, and text present within the technical document. Further, a knowledge model is generated based on the extracted entities and the relationships between the entities. The term 'knowledge model' as used herein refers to a computer-interpretable model of information or knowledge present within the multimodal content. In one embodiment, the knowledge model is a knowledge graph. The knowledge graph may be generated on standards including, but not limited to, Resource Description Framework (RDF), Labeled Property Graphs (LPG) and W3C standard. The knowledge graph comprises at least one node indicative of the extracted entities. The at least one node is associated with one or more other nodes in the knowledge graph. In one embodiment, generating the knowledge graph comprises generating one or more nodes of the knowledge graph based on the entities extracted from the technical document. Each of the nodes represents at least one entity extracted from the document. Further, edges connecting the nodes in the knowledge graph are generated based on the relationships between the entities.

Advantageously, the present invention facilitates representation of technical documents in a searchable format with minimal human intervention and efforts. Further, knowledge or information is extracted from the technical documents in lesser time compared to traditional techniques.

The method comprises storing the representation of the extracted multimodal content in a database. Non-limiting examples of databases for storing the representation of the extracted multimodal content include, a graph database, a relational database, an object database, a hierarchical database, and a structured storage database.

The method comprises providing access to the representation of the multimodal content in the searchable format stored in the database. In an embodiment, in providing access to the representation of the multimodal content, the method comprises providing a file comprising the multimodal content in searchable format on an output device. The format of the file may be one of executable and non-executable. The executable format may comprise a machine-readable knowledge model representing the multimodal content extracted from the technical document. The executable file format may be stored, traversed, queried, analyzed or modified further. The non-executable format may comprise for example, a visual representation of the knowledge model comprising the extracted multimodal content.

In accordance with an embodiment of the present disclosure, the method comprises receiving a request for querying the representation of the multimodal content stored in the database. In an example, the request may be in the form of a semantic query. Further, a response to the request is generated by querying the representation of the multimodal content stored in the database. In an example, the semantic query may be restructured to a suitable format before querying the representation of the multimodal content in the database.

Advantageously, the present invention facilitates resolution of queries from a user based on multimodal content extracted from even non-searchable documents.

In accordance with one embodiment of the present invention, the method comprises generating knowledge-aided design models based on the representation of the multimodal content stored in the database. The term 'knowledge-aided design models' refer to two-dimension or three-dimensional design models that are scaled or sized based on the representation of the multimodal content stored in the database.

Advantageously, the knowledge-aided design model of a product may be used for faster and easier simulations of designs. Further, in manufacturing processes such as additive manufacturing where parameters such as material or surface finish may be specified using the knowledge-aided design models. Therefore, the present invention facilitates efficient resume of expert knowledge extracted from technical documents, in any industry.

The apparatus comprises one or more processing units and a memory unit communicatively coupled to the one or more processing units. The memory unit comprises a knowledge management module stored in the form of machine-readable instructions and executable by the one or more processing units, wherein the knowledge management module is configured to perform method steps according to any of the methods as described above. The execution of the knowledge management module may also be performed using coprocessors such as Graphical Processing Unit (GPU), Field Programmable Gate Array (FPGA) or Neural Processing/Compute Engines. In addition, the memory unit may also include a database.

In another embodiment, the apparatus is a cloud computing system having a cloud computing based platform configured to provide a cloud service for providing access to multimodal content in a technical document. As used herein, "cloud computing" refers to a processing environment comprising configurable computing physical and logical resources, for example, networks, servers, storage, applications, services, etc., and data distributed over the network, for example, the internet. The cloud computing platform may be implemented as a service for providing access to multimodal content in a technical document. In other words, the cloud computing system provides on-demand network access to a shared pool of the configurable computing physical and logical resources. The network is, for example, a wired network, a wireless network, a communication network, or a network formed from any combination of these networks.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:

FIG 1A    illustrates a block diagram of a system for providing access to multimodal content in a technical document, in accordance with an embodiment of the present invention;

FIG 1B    illustrates a block diagram of an apparatus for providing access to the multimodal content in the technical document, in accordance with an embodiment of the present invention;

FIG 2    depicts a flowchart of a method for providing access to the multimodal content in the technical document, in accordance with an embodiment of the present invention;

FIG 3    shows a schematic representation of a convolutional neural network for classifying multimodal content of a specific category from a technical document, in accordance with an embodiment of the present invention;

FIG 4    illustrates an exemplary method for classifying, locating and extracting tabular column from a technical document, in accordance with an embodiment of the present invention;

FIG 5A    illustrates an example of a Graphical User Interface highlighting a bounding box around a tabular column in the technical document;

FIG 5B    illustrates an example of a Graphical User Interface highlighting row lines and column lines in the tabular column;

FIG 6    depicts a flowchart of a method method for classifying, locating and extracting entities corresponding to engineering drawings in a technical document, in accordance with an embodiment of the present invention;

FIG 7A    depicts a flowchart of a method method for tracing horizontal and vertical dimension lines in an engineering drawing, in accordance with an embodiment of the present invention;

FIG 7B    depicts a flowchart of a method method for identifying dimension sets in the engineering drawing, in accordance with an embodiment of the present invention;

FIG 7C    depicts a flowchart of an exemplary method for identifying slanted dimension lines in the monochromatic image, in accordance with an exemplary embodiment of the present invention;

FIG 8A    illustrates a Graphical User Interface showing an example of a technical document comprising engineering drawings;

FIG 8B    illustrates a Graphical User Interface showing a portion of the technical document highlighting a bounding box around an arrowhead;

FIG 8C    illustrates a Graphical User Interface showing a portion of the technical document highlighting a dimension set;

FIG 8D    illustrates a Graphical User Interface showing the technical document after masking of non-graphic information;

FIG 9    depicts a flowchart of an exemplary method for classifying, locating and extracting text from a technical document, in accordance with an embodiment of the present invention;

FIG 10    depicts a flowchart of an exemplary method for representing the extracted multimodal content in searchable format, in accordance with an embodiment of the present invention;

FIG 11    illustrates a knowledge graph, in accordance with an exemplary embodiment of the present invention; and

FIG 12    depicts a flowchart of an exemplary method for generating a response to a request for querying a representation of multimodal content stored in a database, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

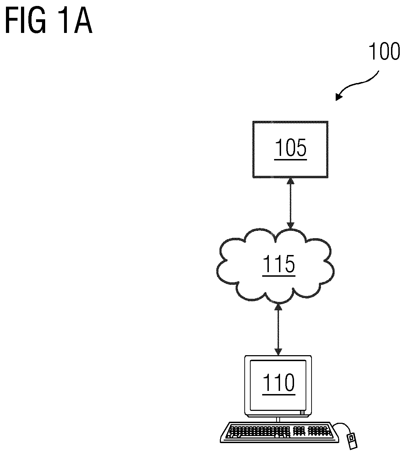

FIG 1A illustrates a block diagram of a system 100 for providing access to multimodal content in a technical document, in accordance with an embodiment of the present invention. The multimodal content includes data in the form of one or more of text, tabular columns, images, drawings and mathematical expressions. The system comprises an apparatus 105 and one or more client devices 110. Non-limiting examples of client devices 110 include personal computers, mobile phones, personal digital assistants and workstations. In the present embodiment, the apparatus 105 is a server. The one or more client devices 110 is connected to the apparatus 105 via a network 115. Non-limiting examples of the network 115 include local area network (LAN), wide area network (WAN), WiFi, etc.

The client device 110 includes a device configured to receive one or more technical documents from a user. In an example, the technical documents may be stored on the client device 110 in soft copy formats. In another example, the user may upload the technical document to the client device 110 through peripheral devices such as scanners, hard disks, CD-ROMs and so on. In case of documents existing in hard copy format, the technical document may be a scanned image of the document. In addition to the technical document, the user may also provide inputs such as annotations that are specific to the technical document. The one or more client devices 110 may also be configured to convert the technical document to a format suitable for processing at the apparatus 105. The one or more client devices 110 may also include a user device, used by the user. In an embodiment, the user device may be used by the user, to send requests to the server for providing access to multimodal content in a technical document. The multimodal content in the technical document may be further accessed or queried by the user via a Graphical User Interface or an application programming interface provided by an application associated with the client device 110. The application may be one of a web-based application and a client-based application. In another embodiment, a request may be sent to the apparatus 105 to access the representation of the multimodal content via the network 115.

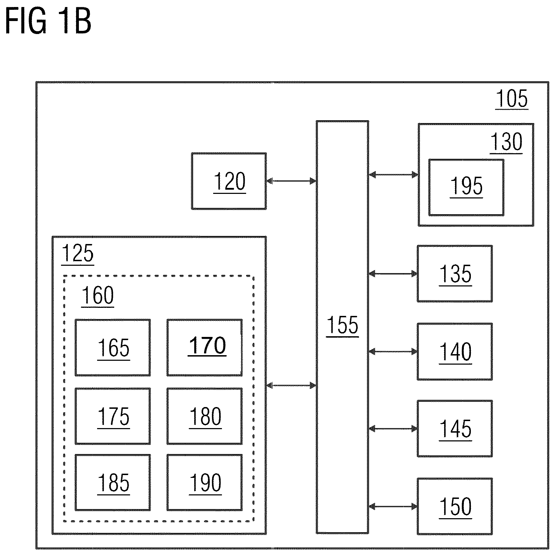

The apparatus 105 comprises a processing unit 120, a memory 125, a storage unit 130, a communication unit 135, a network interface 140, an input unit 145, an output unit 150, a standard interface or bus 155, as shown in FIG 1B. The apparatus 105 can be a (personal) computer, a workstation, a virtual machine running on host hardware, a microcontroller, or an integrated circuit. As an alternative, the apparatus 105 can be a real or a virtual group of computers (the technical term for a real group of computers is "cluster", the technical term for a virtual group of computers is "cloud"). The term 'processing unit', as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit.

The processing unit 120 may also include embedded controllers, such as generic or programmable logic devices or arrays, application specific integrated circuits, single-chip computers, and the like. In general, the processing unit 120 may comprise hardware elements and software elements. The processing unit 120 can be configured for multithreading, i.e. the processing unit 120 may host different calculation processes at the same time, executing the either in parallel or switching between active and passive calculation processes.

The memory 125 may include one or more of a volatile memory and a non-volatile memory. The memory 125 may be coupled for communication with the processing unit 120. The processing unit 120 may execute instructions and/or code stored in the memory 125. A variety of computer-readable storage media may be stored in and accessed from the memory 125. The memory 125 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. The memory 125 comprises a knowledge management module 160 that may be stored in the memory 125 in the form of machine-readable instructions and executable by the processing unit 120. These machine-readable instructions when executed by the processing unit 120 causes the processing unit 120 to perform functions associated with providing access to multimodal content in technical documents.

The knowledge management module 160 comprises a preprocessing module 165, a classification module 170, an entity extraction module 175, a representation module 180, an access module 185, a client interaction module 190. The preprocessing module 165 is configured to receive and process a request for providing access to multimodal content in a technical document from the one or more client devices 110. The classification module 170 is configured to classify the multimodal content in the technical document into one or more pre-defined categories using a machine learning model. The classification module 170 is further configured to determining a location of the classified multimodal content in the technical document. The entity extraction module 175 is configured to extract the classified multimodal content from the determined location in the technical document using one or more trained functions. The representation module 180 is configured to represent the extracted multimodal content in a searchable format. The representation module 180 further stores the representation of the extracted multimodal content in a database 195. The access module 185 is configured to provide access to the representation of the multimodal content in the searchable format stored in the database 195. The client interaction module 190 is configured to receive a request for querying the representation of the multimodal content stored in the database 195, from the one or more client devices 110. The client interaction module 190 further generates a response to the request by querying the representation of the multimodal content stored in the database 195. The client interaction module 190 is further configured to generate knowledge-aided design models based on the representation of the multimodal content stored in the database 195.

The storage unit 130 comprises a non-volatile memory which stores the database 195. The database 195 may store, for example, representations of multimodal content extracted from various technical documents, corpus and so on. The input unit 145 may include input means such as keypad, touch-sensitive display, camera, etc. capable of receiving inputs. The output unit 150 may include output means such as monitors, Human Machine Interfaces etc. The bus 155 acts as interconnect between the processing unit 120, the memory 125, the storage unit 130, and the network interface 140. The communication unit 135 enables the apparatus 105 to communicate with the one or more client devices 110. The communication unit 135 may support different standard communication protocols such as Transport Control Protocol/Internet Protocol (TCP/IP), Profinet, Profibus, Bluetooth and Internet Protocol Version (IPv). The network interface 140 enables the apparatus 105 to communicate with the one or more client devices 110 over the network 115.

The apparatus 105 in accordance with an embodiment of the present invention includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows™, may be employed if suitably modified. The operating system is modified or created in accordance with the present invention as described.

Those of ordinary skilled in the art will appreciate that the hardware depicted in FIGS 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

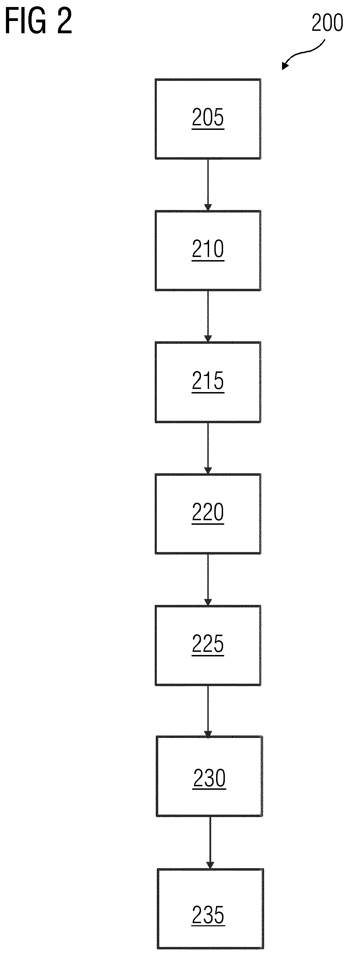

FIG 2 depicts a flowchart of a method 200 for providing access to multimodal content in a technical document, in accordance with an embodiment of the present invention.

At step 205, a request for providing access to multimodal content in a technical document is received from a client device 110 by the processing unit 120. The technical document comprises multimodal content such as text, tabular column, mathematical expressions and engineering drawings. In an embodiment, receiving the request comprises receiving the technical document from the client device 110. The technical document may be in any document format, including but not limited to, PDF, JPEG, JPG, PNG, TIFF. In one example, the technical document is a scanned image of a document in hard copy form. The scanned image comprises a plurality of pixels. For example, if the scanned image has 2048 pixels in width and 1536 pixels in height, the total number of pixels in the image is 3,145,728 pixels or 3.1 megapixels. Each of the pixels are identified using, for example, two-dimensional coordinates or offset values.

At step 210, the multimodal content in the technical document is classified into pre-defined categories using one or more machine learning model. The predefined categories correspond to text, tabular column, mathematical expressions and engineering drawings. In other words, the technical document is parsed using the one or more machine learning models. The machine learning model capable of classifying a specific category of multimodal content is selected from a plurality of machine learning models. In one embodiment, the machine learning model is based on a Convolutional Neural Network (CNN) or variations thereof.

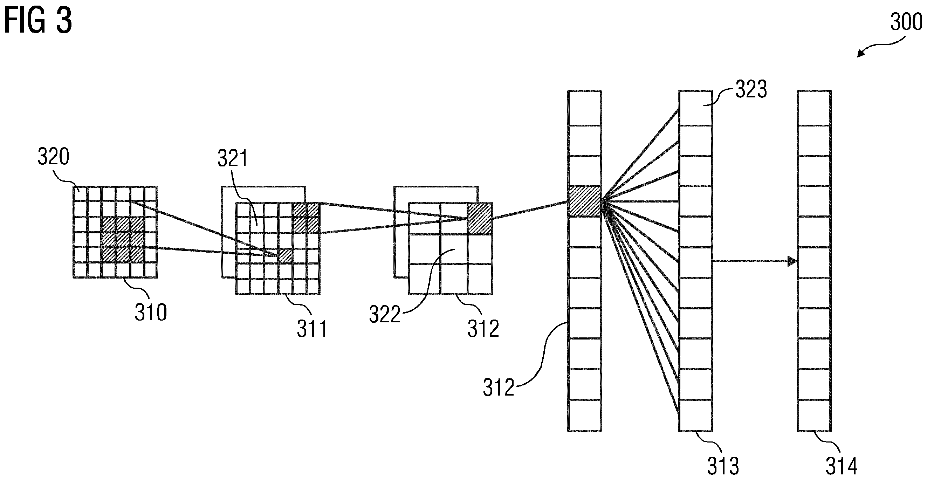

The variations of CNN may include, but are not limited to, Fast Region based CNN (Fast R-CNN), Faster Region based CNN (or Faster R-CNN), Mask Region based CNN (or Mask R-CNN) and You Only Look Once (YOLO). The structure of a CNN is explained in detail using FIG 3. In one embodiment, the multimodal contents in each of the predefined category are classified sequentially using each of the machine learning models in a predetermined order. For example, firstly, regions of interest corresponding to tabular columns is identified using a first machine learning model trained to identify tabular columns. Secondly, regions of interest corresponding to engineering drawings is identified using a second machine learning model trained to identify engineering drawings. Thirdly, regions of interest corresponding to mathematical expressions are identified using a third machine learning model trained to identify mathematical expressions. Fourthly, regions of interest corresponding to text is identified using a fourth machine learning model trained to identify text. The machine learning models generate offset values corresponding to pixels in the identified regions of interest.

At step 215, a location of the classified multimodal content in the technical document is determined. The location of the classified multimodal content is identified based on an output of the one or more machine learning models. For example, bounding boxes are generated based on the offset values in the regions of interest. The bounding boxes outline the regions of interest identified by the one or more machine learning models.

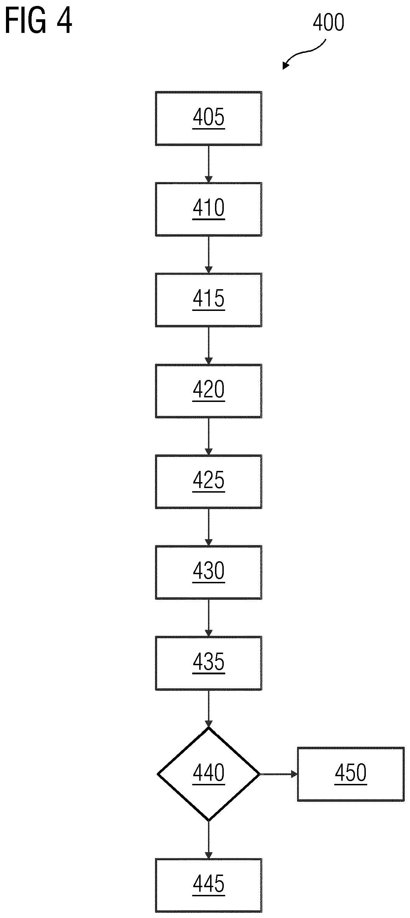

At step 220, the classified multimodal content from the determined location in the technical document is extracted using one or more trained functions. More specifically, one or more entities associated with the classified multimodal content are extracted. The term 'entity' as used herein may refer to different elements based on the specific category of contents. In the context of text, entities may comprise words, chunks of text, sentences and so on. Different types of entities in text include, but are not limited to, nouns, phrases, time expressions, measurement units, quantity, monetary values. In the context of mathematical expressions, entities are a combination of variables, constants, mathematical operators and mathematical symbols. In the context of engineering drawings, entities include, but are not limited to, lines, circles, arcs, points, and rays. In the context of tabular column, entities comprise cells of the tabular column. Each of the trained functions corresponds to a specific category of the multimodal content being extracted. The process of classifying, locating and extracting different categories of multimodal content is explained in detail with reference to FIGS 4 to 9.

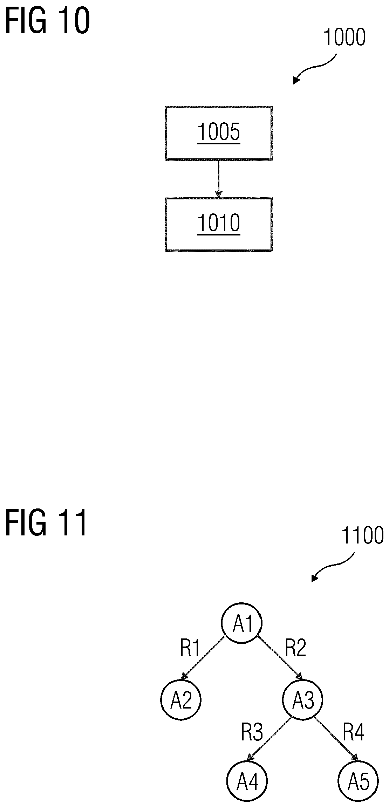

At step 225, the extracted multimodal content is represented in searchable format. In a preferred embodiment, representation of the multimodal content includes a knowledge model that represents the one or more entities extracted along with relationships between the one or more entities. The relationships are determined based on one or more properties of the entities. In one embodiment, the knowledge model is a graphical model or a knowledge graph such as RDF. The graphical model comprises one or more nodes indicative of the one or more entities. Each of the nodes is connected to one or more other nodes in the knowledge graph based on a relationship between the entities corresponding to the nodes. The process of generating a knowledge graph is explained in detail using FIG 10.

At step 230, the representation of the extracted multimodal content is stored in the database 195. For example, the database 195 may be a graphical database that stores graphical models.

At step 235, access to the representation of the multimodal content in the searchable format stored in the database 195 is provided. For example, a file comprising the extracted multimodal content in searchable format may be provided through a Graphical User Interface (GUI). The GUI may be associated with the client device 110.

FIG 3 shows a schematic representation of a convolutional neural network for classifying multimodal content of a specific category from a technical document, in accordance with an embodiment of the present invention. In the displayed embodiment, the convolutional neural network 300 comprises an input layer 310, a convolutional layer 311, a pooling layer 312, a fully connected layer 313 and an output layer 314. Alternatively, the convolutional neural network 300 may comprise several convolutional layers 311, several pooling layers 312 and several fully connected layers 313, as well as other types of layers. The order of the layers may be chosen arbitrarily. In an implementation, fully connected layers 313 are used as the last layers before the output layer 314.

In the convolutional neural network 300, the nodes 320, ..., 324 of layers 310, ..., 314 may be considered to be arranged as a d-dimensional matrix or as a d-dimensional image. In particular, in the two-dimensional case the value of the node 320, ..., 324 indexed with i and j in the n-th layer 310, ..., 314 may be denoted as $x^{(n)}[i,j]$. However, the arrangement of the nodes 320, ..., 324 of one layer 310, ..., 314 does not have an effect on the calculations executed within the convolutional neural network 300 as such, since these are given solely by the structure and the weights of the edges.

In particular, a convolutional layer 311 is characterized by the structure and the weights of the incoming edges forming a convolution operation based on a certain number of kernels. In particular, the structure and the weights of the incoming edges are chosen such that the values $x^{(n)}_k$ of the nodes 321 of the convolutional layer 311 are calculated as a convolution $x^{(n)}_k = K_k * x^{(n-1)}$ based on the values $x^{(n-1)}$ of the nodes 320 of the preceding layer 310, where the convolution* is defined in the two-dimensional case as

$$x_k^{(n)}[i,j] = (K_k * x^{(n-1)})[i,j] = \Sigma_{i'} \, \Sigma_{j'} \, K_k[i',j'] \cdot x^{(n-1)}[i-i',j-j']$$

Here the k-th kernel Kk is a d-dimensional matrix (in the present embodiment, a two-dimensional matrix), which is usually small compared to the number of nodes 320, ..., 324 (e.g. a 3x3 matrix, or a 5x5 matrix). In particular, this implies that the weights of the incoming edges are not independent but chosen such that they produce said convolution equation. In particular, for a kernel being a 3x3 matrix, there are only 9 independent weights (each entry of the kernel matrix corresponding to one independent weight), irrespectively of the number of nodes 320, ..., 324 in the respective layer 310, ..., 314. In particular, for a convolutional layer 311 the number of nodes 321 in the convolutional layer is equivalent to the number of nodes 320 in the preceding layer 310 multiplied with the number of kernels.

If the nodes 320 of the preceding layer 310 are arranged as a d-dimensional matrix, using a plurality of kernels may be interpreted as adding a further dimension (denoted as "depth" dimension), so that the nodes 321 of the convolutional layer 321 are arranged as a (d+1)-dimensional matrix. If the nodes 320 of the preceding layer 310 are already arranged as a (d+1)-dimensional matrix comprising a depth dimension, using a plurality of kernels may be interpreted as expanding along the depth dimension, so that the nodes 321 of the convolutional layer 321 are arranged also as a (d+1)-dimensional matrix, wherein the size of the (d+1)-dimensional matrix with respect to the depth dimension is by a factor of the number of kernels larger than in the preceding layer 310.

The advantage of using convolutional layers 311 is that spatially local correlation of the input data may exploited by enforcing a local connectivity pattern between nodes of adjacent layers, in particular by each node being connected to only a small region of the nodes of the preceding layer.

In the displayed embodiment, the input layer 310 comprises 36 nodes 320, arranged as a two-dimensional 6x6 matrix. The convolutional layer 311 comprises 72 nodes 321, arranged as two two-dimensional 6x6 matrices, each of the two matrices being the result of a convolution of the values of the input layer with a kernel. Equivalently, the nodes 321 of the convolutional layer 311 may be interpreted as arranges as a three-dimensional 6x6x2 matrix, wherein the last dimension is the depth dimension.

The pooling layer 312 may be characterized by the structure and the weights of the incoming edges and the activation function of its nodes 322 forming a pooling operation based on a non-linear pooling function f. For example, in the two-dimensional case the values $x^{(n)}$ of the nodes 322 of the pooling layer 312 may be calculated based on the values $x^{(n-1)}$ of the nodes 321 of the preceding layer 311 as $x^{(n)}[i,j] = f(x^{(n-1)}[id_1, jd_2], ..., x^{(n-1)}[id_1+d_1-1, jd_2+d_2-1])$. In other words, the number of nodes 321, 322 may be reduced by using the pooling layer 312, by replacing a number $d_1 \cdot d_2$ of neighboring nodes 321 in the preceding layer 311 with a single node 322 being calculated as a function of the values of said number of neighboring nodes in the pooling layer. In particular, the pooling function f may be the max-function, the average or the L2-Norm. In particular, for the pooling layer 312 the weights of the incoming edges are fixed and are not modified by training.

The advantage of using the pooling layer 312 is that the number of nodes 321, 322 and the number of parameters is reduced. This leads to the amount of computation in the convolutional neural network 300 being reduced and to a control of overfitting.

In the displayed embodiment, the pooling layer 312 is a max-pooling, replacing four neighboring nodes with only one node, the value being the maximum of the values of the four neighboring nodes. The max-pooling is applied to each d-dimensional matrix of the previous layer. In the present embodiment, the max-pooling is applied to each of the two two-dimensional matrices, reducing the number of nodes from 72 to 18.

The fully-connected layer 313 may be characterized by the fact that a majority, in particular, all edges between nodes 322 of the previous layer 312 and the nodes 323 of the fully-connected layer 313 are present, and wherein the weight of each of the edges may be adjusted individually.

In the present embodiment, the nodes 322 of the preceding layer 312 of the fully-connected layer 313 are displayed both as two-dimensional matrices, and additionally as non-related nodes (indicated as a line of nodes, wherein the number of nodes was reduced for a better presentability).

In the present embodiment, the number of nodes 323 in the fully connected layer 313 is equal to the number of nodes 322 in the preceding layer 312. Alternatively, the number of nodes 322, 323 may differ. Furthermore, in the present embodiment, the values of the nodes 324 of the output layer 314 are determined by applying the Softmax function onto the values of the nodes 323 of the preceding layer 313. By applying the Softmax function, the sum of the values of all nodes 324 of the output layer is 1, and all values of all nodes 324 of the output layer are real numbers between 0 and 1. In particular, if using the convolutional neural network 300 for categorizing input data, the values of the output layer may be interpreted as the probability of the input data falling into one of the different categories.

The convolutional neural network 300 may also comprise a ReLU (acronym for "rectified linear units") layer. In particular, the number of nodes and the structure of the nodes contained in a ReLU layer is equivalent to the number of nodes and the structure of the nodes contained in the preceding layer. In particular, the value of each node in the ReLU layer is calculated by applying a rectifying function to the value of the corresponding node of the preceding layer. Examples for rectifying functions are $f(x) = max(0,x)$, the tangent hyperbolic function or the sigmoid function.

In particular, convolutional neural networks 300 may be trained based on the back-propagation algorithm. To prevent overfitting, methods of regularization may be used, e.g. dropout of nodes 320, ..., 324, stochastic pooling, use of artificial data, weight decay based on the L1 or the L2 norm, or max norm constraints.

In one embodiment, the CNN 300 is adapted for classifying multimodal content of a specific category from a technical document. For example, in case of detection of entities using Faster R-CNN algorithm, the CNN may further comprise a Region Proposal Network after the convolution layers. In another embodiment, the CNN 300 is adapted to determine/extract relationships between entities extracted from the technical document.

FIG 4 illustrates an exemplary method 400 for classifying, locating and extracting tabular column from a technical document, in accordance with an embodiment of the present invention.

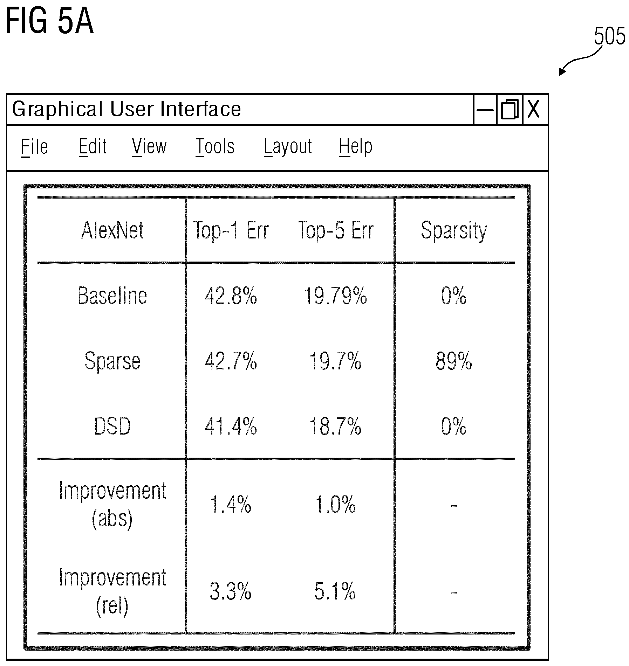

At step 405, the technical document is provided as input to a machine learning model. In the present embodiment, the machine learning model is a CNN based on Faster R-CNN algorithm. The CNN is configured to classify and locate tabular columns in a technical document, through training based on a training dataset comprising a plurality of images comprising tabular column. During training, the CNN adapts itself, for example, using back propagation algorithm to predict offset values corresponding to bounding boxes around tabular columns from any given technical document. In the present embodiment, the machine learning model outputs offset values corresponding to bounding boxes around tabular column in the technical document. For example, the offset values comprise coordinates of each corner of the bounding box. FIG 5A illustrates an example of a GUI 505 showing a bounding box (indicated by the thick line) around a tabular column.

At step 410, one or more morphological operations are used to identify a structure of the tabular column. The technical document is firstly converted to a binary image in order to perform the morphological operation. The binary image consists of '1's and '0's in place of pixels. Further, the morphological operation is performed on the binary image using structuring elements. In a preferred embodiment, the morphological operation includes erosion and/or dilation operations. Upon performing the morphological operation, a new binary image highlighting the structure of the tabular column is generated.

At step 415, number of rows in the tabular column is identified from the new binary image. The number of rows is identified by computing a horizontal projection profile from the structure in the new binary image. The horizontal projection profile is a sum of all pixel values in a row. In the present embodiment, the pixel values are one of '1' or '0'. In the present example, where rows are not clearly demarcated by boundaries in the tabular column, the horizontal projection profiles are determined based on inter-row distances. For example, if the horizontal projection profile is '0' for a predetermined number of consecutive rows of pixels, a row is detected. Based on the number of rows, row lines are projected over the binary image to demarcate the rows.

At step 420, number of columns in the tabular column is identified. In the present embodiment, the number of columns is determined by generating bounding boxes words in the tabular column. The bounding boxes are generated using a machine learning model similar to the one explained in 405. However, in this case the machine learning model is configured to identify words or chunks of text. The machine learning model predicts offset values that are indicative of corners of the bounding boxes. Further, the number of columns are calculated based on edges of the bounding boxes around the text. Based on the number of columns, column lines are projected over the binary image to demarcate the columns.

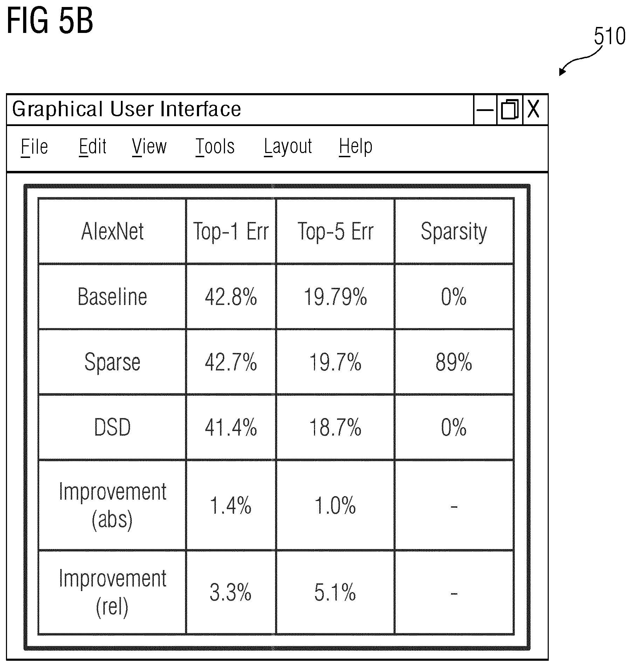

At step 425, cells of the tabular column are identified based on the row lines and the column lines. FIG 5B illustrates an example of a GUI 510 highlighting (indicated by thick lines) row lines and column lines in the tabular column.

At step 430, the cells are cropped from the binary image as smaller images. More specifically, the cells are cropped using a contour detection algorithm that generates bounding boxes around the cells based on the row lines and column lines.

At step 435, cells of the tabular column are extracted and stored separately. In a preferred embodiment, the cells are stored using a data structure such a 'list of lists'. Each element in the 'list of lists' corresponds to an image of a cell.

It must be understood that in case of nested columns or rows, the cells are further processed similar to the method described above, in order to further segregate the cells.

At step 440, a trained function classifies each of the cell images extracted at step 435 into one of formula and text. In the present embodiment, the trained function is a classification model. The classification model is configured to classify a given cell image into one of formula and text. If the cell image is associated with text, step 445 is performed. Otherwise, step 450 is performed.

At step 445, text from the cell image is identified using a predefined function for text recognition. In an example, an Optical Character Recognition tool such as tesseract is used for text recognition.

At step 450, formula from the cell is extracted using a predefined function for an image of a formula to a formula. In an example, the predefined function may use an im2latex model that generates a latex representation of the formula.

The text or formula extracted from the table are further used to generate a knowledge model as explained in FIG 10.

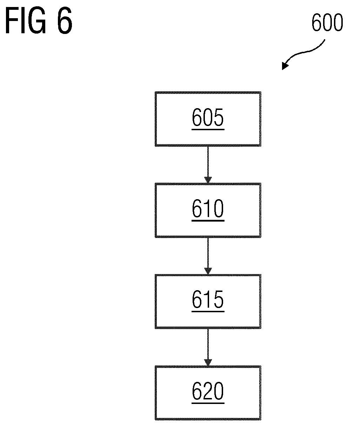

FIG 6 depicts a flowchart of a method 600 for classifying, locating and extracting entities corresponding to engineering drawings in a technical document, in accordance with an embodiment of the present invention.

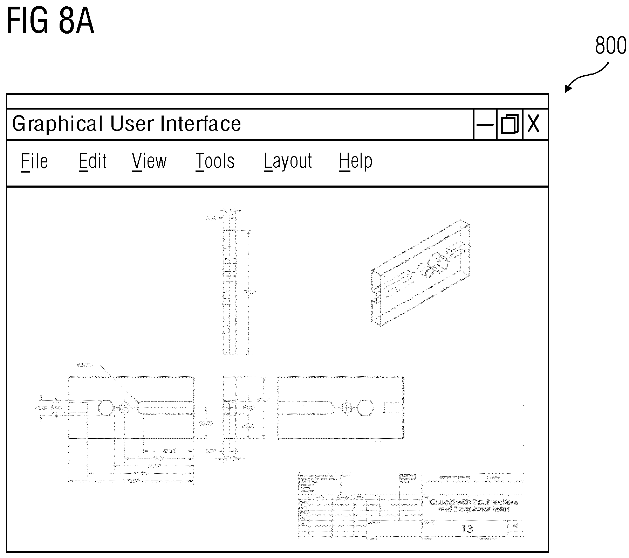

At step 605, the technical document is firstly converted to an RGB image. In the present embodiment, the engineering drawing comprises entities such as dimension lines, dimensions, title, material specifications and so on, in addition to orthographic views. FIG 8A illustrates a GUI 800 showing an example of a technical document comprising engineering drawings.

At step 610, the RGB image is provided as input to a machine learning model. In the present embodiment, the machine learning model is an image segmentation model based on masked R-CNN algorithm. The machine learning model is configured to classify various entities related to the technical document, through training based on several instances of two-dimensional or three-dimensional drawings. The various entities include non-graphic information, but are not limited to, dimension texts, arrowheads, material properties and other text present with the technical document. In an alternate embodiment, the non-graphic information are identified based on annotations provided manually by a user through the client device 110. For example, the user may provide annotations for radius, dimensions, arrowheads, title and so on. The annotations may be provided using a tool such as VGG annotator. Further, the annotations are stored in a separate file, for example, in JSON format. Further, the machine learning model outputs offset values corresponding to regions of interests associated with the non-graphic information. Based on the offset values, the non-graphic information is located using bounding boxes generated based on the offset values.

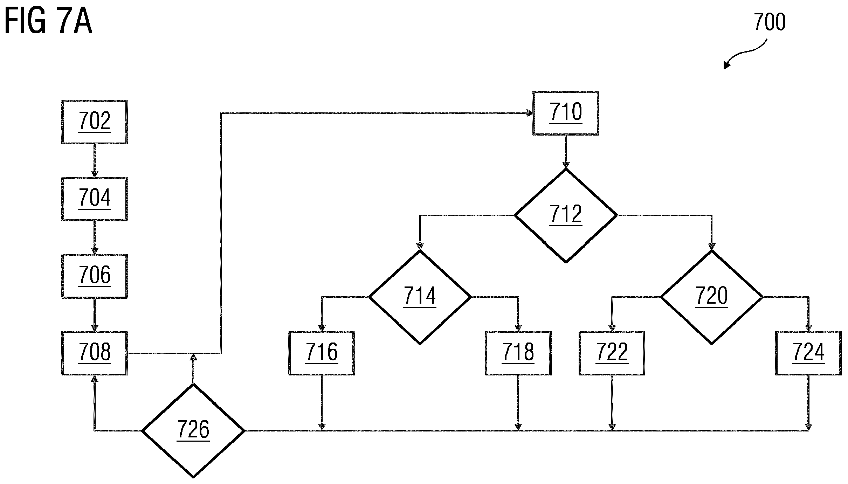

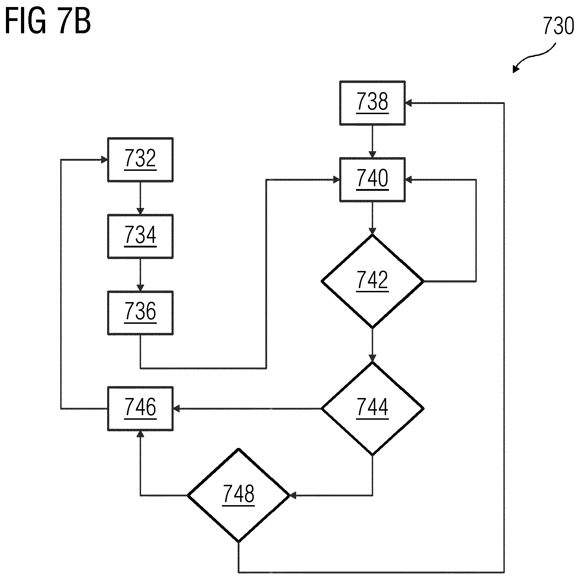

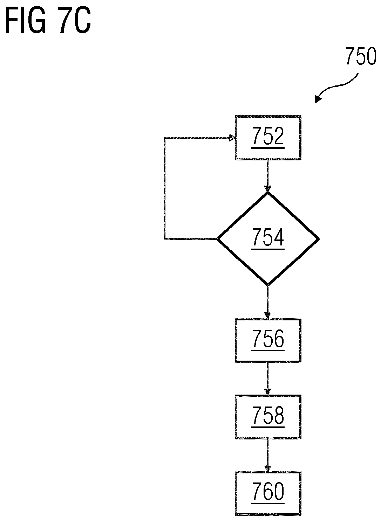

At step 615, dimensions of the drawings are extracted, by firstly denoising the technical document using a denoising algorithm. In one embodiment, the denoising algorithm is non-local means algorithm. Further, a thresholding operation is performed on the denoised image to obtain a monochromatic image. In an embodiment, the thresholding operation comprises adaptive thresholding. Further, dimension lines are traced and dimension sets are identified from the monochromatic image using a trained function. Here, the trained function is a line tracing algorithm. The line tracing algorithm is explained in detail using FIGS 7A, 7B and 7C.

At step 620, the dimension sets and other entities are further represented in a searchable format in a preferred embodiment, the dimension sets and other entities are represented as a knowledge model as explained using FIG 10. Although the present disclosure discusses extraction of orthographic views in detail, it must be understood by a person skilled in the art that isometric views may also be extracted in a similar manner.

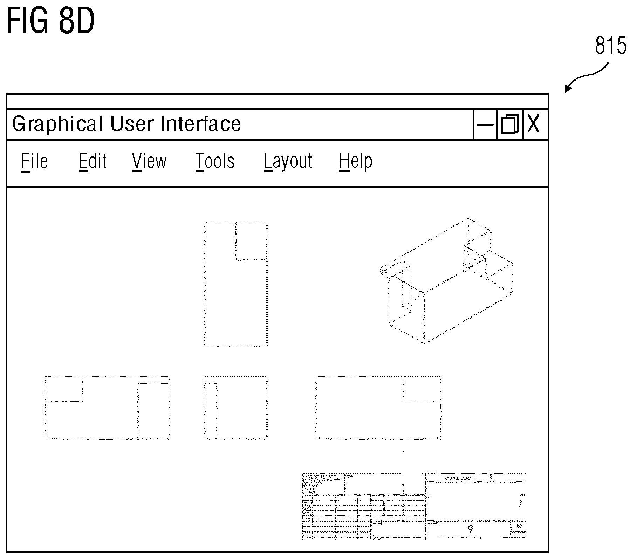

In one embodiment, the dimension sets, dimension lines and other entities in the monochromatic image are further masked in order to generate a raster image comprising only the orthographic views. The dimension sets, dimension lines and other entities may be masked by converting the black pixels to white pixels as shown in FIG 8D. FIG 8D illustrates a GUI 815 showing a technical document after masking non-graphic information. Further, contours of the orthographic views are identified using a contour detection algorithm. The contour detection algorithm further plots each contour as a separate raster image. Each of the raster images are further converted to a vector image.

The vector images may be further stored separately for the purpose of constructing three-dimensional models in a Computer-Aided Design (CAD) environment. In a further embodiment, the entities in the knowledge model are further used for generating knowledge-aided design models. The knowledge-aided design models may comprise three-dimensional models generated based on the vector images and the knowledge model comprising the extracted entities. More specifically, the dimension sets stored in the knowledge model are used for scaling the vector images to generate the three-dimensional models.

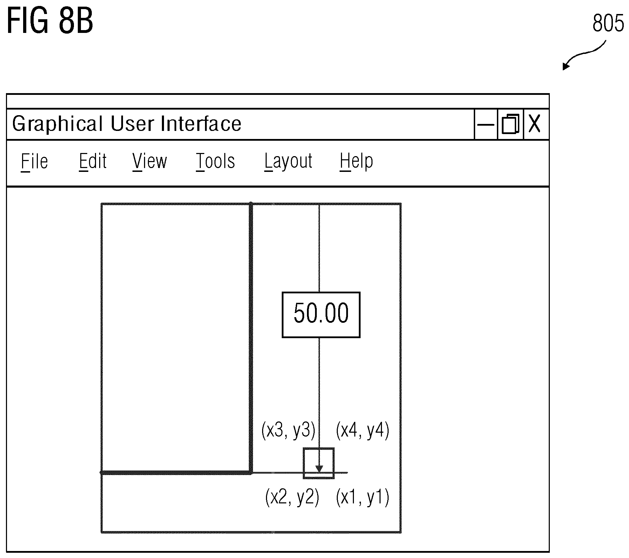

FIG 7A depicts a flowchart of a method 700 for tracing horizontal and vertical dimension lines in an engineering drawing, in accordance with an embodiment of the present invention. The method 700 may be explained in conjunction with FIG 8B. FIG 8B illustrates a GUI 805 showing a portion of the technical document in FIG 8A highlighting a bounding box around an arrowhead.

At step 702, offset values generated by the masked R-CNN algorithm corresponding to arrowheads are obtained from the monochromatic image. At step 704, bounding boxes are generated based on the offset values. At step 706, centers corresponding to each of the bounding boxes are determined. For example, the center may be identified as a coordinate (cx, cy). At step 708, a bounding box associated with an arrowhead is selected. At step 710, a pair of adjacent corners of the selected bounding box is chosen. The corners may be identified by coordinates (x1,y1) & (x2, y2) as seen in FIG 8B. At step 712, the method comprises determining whether horizontal tracing or vertical tracing is to be performed. If the x-coordinates of the corners are equal, that is if x1=x2, step 714 is performed.

Otherwise, step 720 is performed. At step 714, a direction of traversal for horizontal tracing is determined. If x1<cx, the direction of traversal is selected as towards left as shown in step 716. Further step 726 is performed. Otherwise, if x1>cx, the direction of traversal is selected as towards right as shown in step 718. Further step 726 is performed. At step 720, a direction of traversal for vertical tracing is determined. If y1<cy, the direction of traversal is selected as upwards as shown in step 722. Further, step 726 is performed. Otherwise, if y1>cy, the direction of traversal is selected as downwards as shown in step 724. At step 726, the method comprises identifying whether other adjacent corners are present in the monochromatic image. If yes, step 710 is repeated. Otherwise, step 708 is repeated.

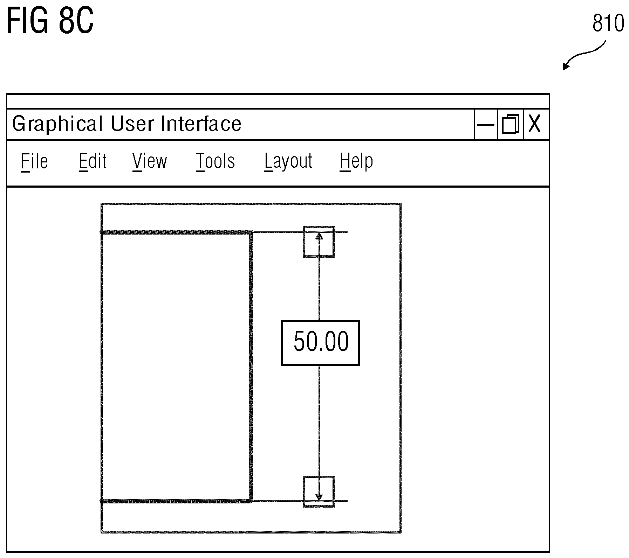

FIG 7B depicts a flowchart of a method 730 for identifying dimension sets from the monochromatic image after tracing of vertical and horizontal dimension lines, in accordance with an embodiment of the present invention. The method 730 is explained in conjunction with FIG 8C. FIG 8C illustrates a GUI 810 showing a portion of the technical document highlighting a dimension set.

At step 732, any two bounding boxes in the monochromatic image are chosen randomly. The bounding boxes may correspond to arrowheads, dimension text, material specifications and so on. At step 734, the method comprises determining whether the chosen bounding boxes correspond to arrowheads. If yes, step 736 is performed. Otherwise, step 732 is repeated. At step 736, a direction of collinearity between the arrowheads corresponding to the arrowheads is identified. The direction of collinearity may be identified as one of horizontal and vertical. At step 738, a bounding box corresponding to a dimension text is chosen. At step 740, lines originating from each of the arrowheads are chosen. At step 742, the method comprises determining whether the lines originating from the arrowheads in opposite directions. If yes, step 744 is performed. Otherwise, step 740 is repeated. At step 744, the method comprises determining whether the lines originating from the arrowheads intersect with the boundary box of the dimension text. If yes, step 746 is performed. Otherwise, step 748 is performed. At step 746, a dimension set comprising the arrowheads and the dimension text is created. Further, step 732 is repeated. At step 748, the method comprises determining whether end points of the lines originating from the arrowheads touch the boundary box of the dimension text. If yes, step 746 is performed. Otherwise, step 738 is repeated.

FIG 7C depicts a flowchart of an exemplary method 750 for identifying slanted dimension lines in the monochromatic image, in accordance with an exemplary embodiment of the present invention.

At step 752, a bounding box corresponding to an arrowhead is chosen from the monochromatic image. At step 754, the method comprises determining whether the chosen arrowhead forms part of a dimension set. If the arrowhead is part of a dimension set, step 752 is repeated. Otherwise, step 756 is performed. At step 756, two adjacent corners of the bounding box corresponding to the arrowhead are selected. At step 758, edges of the bounding box are traversing the edges of the bounding box in order to detect an end point of a line in contact with the bounding box. Upon detecting an end point, pixel-wise tracing of the line is performed until the line reaches bounding box of a dimension text as shown in step 760. Further, step 756 is repeated.

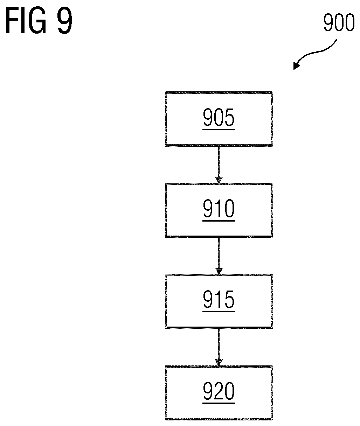

FIG 9 depicts a flowchart of an exemplary method 900 for classifying, locating and extracting text from a technical document, in accordance with an embodiment of the present invention.

At step 905, technical document is firstly converted to machine-readable form using Optical Character Recognition techniques. Further, the text is tokenized using a tokenization algorithm, for example, based on whitespaces, punctuations and so on.

At step 910, entities are classified using a machine learning model. The machine learning model is selected from the plurality of machine learning models for the purpose of identifying entities corresponding to text. In an embodiment, the machine learning model is a Named Entity Recognition (NER) model configured to classify named entities from the text, through training based on a corpus. For example, the machine learning model may be a Recurrent Neural Network (RNN). In another example, the machine learning model may be a bidirectional LSTM. In yet another embodiment, a natural language analysis tool may be selected for classifying the entities.

At step 915, each of the entities are mapped or classified into predefined classes using a trained function. The predefined classes include, for example, person names, organizations, locations, time expressions, quantities, monetary values, percentages, etc. In the present embodiment, the trained function is a classification model. It must be understood that the entities in the technical document may also include mathematical expressions. In one embodiment, the classification model may be trained to classify such mathematical expressions.

At step 920, the entities are tagged based on the mapping. Upon tagging, bounding boxes are generated around the entities. The tagged entities are further extracted from the technical document based on predefined functions.

FIG 10 depicts a flowchart of an exemplary method 1000 for representing the extracted multimodal content in a searchable format, in accordance with an embodiment of the present invention. In the present embodiment, the extracted multimodal content is represented as a knowledge model that may be searched or queried by a user through the client device 110. More specifically, the knowledge model is a knowledge graph based on RDF.

At first, relationships between the extracted entities is determined based on predefined rules for specific category of multimodal content. For example, in case of tabular column, the relationship may be determined based on a relative position of the entities. Entities extracted from a single row of the tabular column may be identified as related entities. Further, the relationships between the entities in the row may be identified based on titles of respective columns associated with the entities in the tabular column. The relationships may also be identified based on commonalities based on at least one feature of the entities. In one embodiment, a machine learning model is used for identifying the commonalities between the entities. In yet another example, the relationships may be identified based on pre-existing ontologies or knowledge models stored in the database 195.

At step 1005, one or more nodes of the knowledge graph are generated based on one or more entities extracted from the technical document. Each of the nodes represent at least one entity extracted from the technical document. More specifically, the nodes store the entities as data structures that are machine-readable. Each of the nodes may be identified using a Unique Resource Identifier (URI).

At step 1010, edges connecting the nodes in the knowledge model are generated based on the relationships between the entities. The edges may be one of directed edges and undirected edges. More specifically, the edges are represented using tuples. For example, if there are two related nodes with URIs A1 and A2 sharing a relationship R1, the tuple may be represented as [A1,R1,A2]. Here, the ordering of the URIs within the tuple may indicate a direction of the edge. FIG 11 illustrates a knowledge graph 1100, in accordance with an exemplary embodiment of the present invention. The knowledge graph comprising five nodes A1, A2, A3, A4 and A5. The nodes A1 and A2 share a relationship R1, A1 and A3 share a relationship R2, A3 and A4 share a relationship R3, and A3 and A5 share a relationship R4.

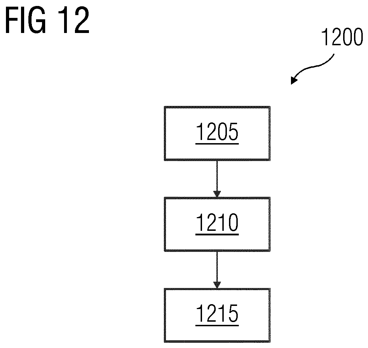

FIG 12 depicts a flowchart of an exemplary method 1200 for generating a response to a request for querying a representation of multimodal content stored in a database associated with the apparatus 105, in accordance with an embodiment of the present invention. In the present embodiment, the representation of the multimodal content is stored as a knowledge graph in a graph database. In one example, the query may be a semantic query of the form "What is the pressure when the temperature is 18 degrees?". The query may be received from the client device 110 associated with a user.

At step 1205, entities in the query are identified using a machine learning model. The machine learning model is configured to perform NER, through training based on a plurality of sentences. The identified entities are mapped to predefined classes. The predefined classes include an asked entity, a given entity, constants and units. For example, in the present example, the asked entity is 'pressure', the given entity is 'temperature', the constant is '18' and the unit is 'degrees'. The entities may be mapped to the predefined classes based on a relative position of the entities in the semantic query.

At step 1210, a logic statement is generated based on the classes of the entities. The logic statement is further used to structure the query in graph query language. The graph query language may be, for example, SPARQL.

At step 1215, the query in graph query language causes a filter operation be applied to the knowledge graph. More specifically, the filter operation selects sections of the knowledge graph comprising the asked entity along with relationships between the asked entity and other entities, From the selected sections, only the sections comprising a temperature value equal to 18 are identified. Further, a response is generated based on the value of the asked entity in the identified section. The response may be further transmitted to the client device 110 and provided as a notification on a GUI associated with the client device 110.

The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples.

reference list

| | |
|---|---|
| 100 | system for providing access to multimodal content in a technical document |
| 105 | apparatus for providing access to multimodal content in a technical document |
| 110 | client device |
| 115 | network |
| 120 | processing unit |
| 125 | memory |
| 130 | storage unit |
| 135 | communication unit |
| 140 | network interface |
| 145 | input unit |
| 150 | output unit |
| 155 | bus |
| 160 | knowledge management module |
| 165 | preprocessing module |
| 170 | classification module |
| 175 | entity extraction module |
| 180 | representation module |
| 185 | access module |
| 190 | client interaction module |
| 195 | database |
| 300 | convolutional neural network |
| 505 | Graphical User Interface showing a bounding box around a tabular column |
| 800 | Graphical User Interface showing an example of a technical document comprising engineering drawings |
| 805 | Graphical User Interface showing a portion of the technical document highlighting a bounding box around an arrowhead |
| 810 | Graphical User Interface showing a portion of the technical document highlighting a dimension set |
| 815 | Graphical User Interface showing an technical document after masking non-graphic information |
| 1100 | knowledge graph |

**Claims**

1. A computer-implemented method for providing access to multimodal content in a technical document, the method comprising:

   Receiving (205), by a processing unit (120), a request for providing access to multimodal content in the technical document from a source (110);
   classifying (210) the multimodal content in the technical document into one or more pre-defined categories, corresponding to text, tabular column, mathematical expressions and engineering drawings, using one or more machine learning models;
   determining (215) a location of the classified multimodal content in the technical document;
   extracting (220) the classified multimodal content from the determined location in the technical document using one or more trained functions, wherein each trained function corresponds to a specific category of the multimodal content being extracted;
   representing (225) the extracted multimodal content in a searchable format;
   storing (230) the representation of the extracted multimodal content in a database (195); and
   providing access (235) to the representation of the multimodal content in the searchable format stored in the database (195), wherein providing access (235) comprises providing a file comprising the multimodal content in searchable format on an output device,
   wherein the classifying (210), determining (215) and extracting (220) of entities in the multimodal content in the technical document corresponding to engineering drawings comprise:

   converting (605) the technical document to an RGB image,
   classifying (610) entities including non-graphic information, wherein the RGB image is provided as input to a machine learning model, the machine learning model being an image segmentation model based on masked R-CNN algorithm, the machine learning model outputting offset values corresponding to regions of interests associated with the non-graphic information based on the offset values the non-graphic information being located using bounding boxes generated based on the offset values,
   extracting (615) dimensions of the drawings, by denoising the technical document using a denoising algorithm, performing a thresholding operation on the denoised image to obtain a monochromatic image, tracing dimension lines and identifying dimension sets from the monochromatic image using a line tracing algorithm,
   wherein tracing dimension lines and identifying dimension sets from the monochromatic image using a line tracing algorithm comprise:

   generating (702) offset values by the masked R-CNN algorithm corresponding to arrowheads obtained from the monochromatic image,
   generating (704) bounding boxes based on the offset values,
   determining (706) centers corresponding to each of the bounding boxes,
   selecting (708) a bounding box associated with an arrowhead,
   choosing (710) a pair of adjacent corners of the selected bounding box,
   determining (712, 714, 716) whether horizontal tracing or vertical tracing is to be performed,
   in case of horizontal tracing, determining (714) a direction of traversal for horizontal tracing and selecting (716, 718) the direction of traversal either towards left or right,
   in case of vertical tracing, determining (720) a direction of traversal for vertical tracing and selecting (722, 724) the direction of traversal either towards left or right,
   identifying (726) whether other adjacent corners are present in the monochromatic image, and if yes, repeat selecting (708) a bounding box associated with an arrowhead, otherwise, repeat selecting (708) a bounding box associated with an arrowhead, and
   identifying (730) dimension sets from the monochromatic image after tracing of vertical and horizontal dimension lines.

2. The method according to claim 1, wherein the technical document is one of a searchable document and a non-searchable document.

3. The method according to claim 1 or 2, wherein classifying (210) the multimodal content in the technical document into one or more pre-defined categories using the machine learning model comprises:
   parsing the technical document using the one or more machine learning models.

**4.** The method according to any of claims 1 to 3, wherein the classified multimodal content comprises a tabular column, and wherein extracting the classified multimodal content from the determined location in the technical document using the one or more trained functions further comprises:

identifying a structure of the tabular column using at least one morphological operation;
identifying cells of the tabular column using a contour detection algorithm; and
classifying the cells of the tabular column into one of formula and text using the one or more trained functions; and
extracting the one or more entities from the tabular column using predefined functions based on the classification of the cells.

**5.** The method according to any of claims 1 to 4, further comprising:

segregating the orthographic views from the non-graphic information using the one or more trained functions; and
extracting the one or more entities representing the orthographic views from the technical document using a contour detection algorithm.

**6.** The method according to any of claims 1 to 5, wherein representing the extracted multimodal content in the searchable format comprises:

determining relationships between the extracted one or more entities based on one or more properties of the entities; and
generating a knowledge model based on the extracted entities and the relationships between the entities.

**7.** The method according to any of claims 1 to 6, further comprising:

receiving a request for querying the representation of the multimodal content stored in the database (195); and
generating a response to the request by querying the representation of the multimodal content stored in the database (195).

**8.** An apparatus (105) for providing access to multimodal content in a technical document, the apparatus (105) comprising:

one or more processing units (120); and
a memory unit (125) communicatively coupled to the one or more processing units (120), wherein the memory unit (125) comprises a knowledge management module (160) stored in the form of machine-readable instructions executable by the one or more processing units (120), wherein the knowledge management module (160) is configured to perform method steps according to any of the claims 1 to 7.

**9.** A system (100) for providing access to multimodal content in a technical document, the system (100) comprising:
one or more client devices (110); and
an apparatus (105) according to claim 10, communicatively coupled to the one or more client devices, (110) for generating knowledge models from technical documents based on requests received from the one or more client devices (110) according to any of the method claims 1 to 7.

**10.** A computer-program product having machine-readable instructions stored therein, which, when executed by one or more processing units (120), cause the processing units (120) to perform a method according to any of the claims 1 to 7.

**11.** A computer-readable storage medium comprising instructions which, when executed by one or more processing units (120), cause the one or more processing units (120) to perform a method according to any of the claims 1 to 7.

**Patentansprüche**

**1.** Computerimplementiertes Verfahren zum Bereitstellen von Zugriff auf multimodalen Inhalt in einem technischen Dokument, wobei das Verfahren Folgendes umfasst:

Empfangen (205) einer Anforderung zum Bereitstellen von Zugriff auf multimodalen Inhalt in dem technischen Dokument von einer Quelle (110) durch eine Verarbeitungseinheit (120);

Klassifizieren (210) des multimodalen Inhalts in dem technischen Dokument in eine oder mehrere vordefinierte Kategorien, die Text, Tabellenspalten, mathematischen Ausdrücken und technischen Zeichnungen entsprechen, unter Verwendung eines oder mehrerer Modelle für maschinelles Lernen;

Bestimmen (215) eines Orts des klassifizierten multimodalen Inhalts in dem technischen Dokument;

Extrahieren (220) des klassifizierten multimodalen Inhalts von dem bestimmten Ort in dem technischen Dokument unter Verwendung einer oder mehrerer trainierter Funktionen, wobei jede trainierte Funktion einer spezifischen Kategorie des multimodalen Inhalts, der extrahiert wird, entspricht;

Darstellen (225) des extrahierten multimodalen Inhalts in einem durchsuchbaren Format;

Speichern (230) der Darstellung des extrahierten multimodalen Inhalts in einer Datenbank (195); und

Bereitstellen von Zugriff (235) auf die Darstellung des multimodalen Inhalts in dem durchsuchbaren Format, der in der Datenbank (195) gespeichert ist, wobei das Bereitstellen von Zugriff (235) das Bereitstellen einer Datei, die den multimodalen Inhalt in einem durchsuchbaren Format umfasst, an einer Ausgabeeinrichtung umfasst,

wobei das Klassifizieren (210), das Bestimmen (215) und das Extrahieren (220) von Entitäten in dem multimodalen Inhalt in dem technischen Dokument, die technischen Zeichnungen entsprechen, Folgendes umfasst:

Umwandeln (605) des technischen Dokuments in ein RGB-Bild,

Klassifizieren (610) von Entitäten, die nichtgrafische Informationen enthalten, wobei das RGB-Bild als Eingabe in ein Modell für maschinelles Lernen bereitgestellt wird, wobei das Modell für maschinelles Lernen ein Bildsegmentierungsmodell, das auf einem maskierten R-CNN-Algorithmus beruht, ist, wobei das Modell für maschinelles Lernen Versatzwerte ausgibt, die interessierenden Gebieten entsprechen, denen die nichtgrafischen Informationen zugeordnet sind, wobei die nichtgrafischen Informationen auf der Grundlage der Versatzwerte unter Verwendung auf der Grundlage der Versatzwerte erzeugter Bounding-Boxen platziert werden,

Extrahieren (615) von Maßen der Zeichnungen durch Rauschminderung des technischen Dokuments unter Verwendung eines Rauschminderungsalgorithmus, Durchführen einer Schwellenwertbildungsoperation an dem rauschgeminderten Bild, um ein monochromatisches Bild zu erhalten, Abtasten von Maßlinien und Identifizieren von Maßsätzen aus dem monochromatischen Bild unter Verwendung eines Linienabtastalgorithmus,

wobei das Abtasten von Maßlinien und das Identifizieren von Maßsätzen aus dem monochromatischen Bild unter Verwendung eines Linienabtastalgorithmus Folgendes umfassen:

Erzeugen (702) von Versatzwerten, die Maßpfeilen entsprechen, die aus dem monochromatischen Bild erhalten werden, durch den maskierten R-CNN-Algorithmus,

Erzeugen (704) von Bounding-Boxen auf der Grundlage der Versatzwerte,

Bestimmen (706) von Mittelpunkten, die jeder der Bounding-Boxen entsprechen,

Auswählen (708) einer Bounding-Box, der ein Maßpfeil zugeordnet ist,

Wählen (710) eines Paars benachbarter Ecken der ausgewählten Bounding-Box,

Bestimmen (712, 714, 716), ob ein horizontales Abtasten oder ein vertikales Abtasten durchgeführt werden soll,

im Fall des horizontalen Abtastens Bestimmen (714) einer Richtung des Durchquerens für das horizontale Abtasten und Auswählen (716, 718) der Richtung des Durchquerens entweder nach links oder rechts,

im Fall des vertikalen Abtastens Bestimmen (720) einer Richtung des Durchquerens für das vertikale Abtasten und Auswählen (722, 724) der Richtung des Durchquerens entweder nach links oder rechts,

Identifizieren (726), ob in dem monochromatischen Bild weitere benachbarte Ecken vorhanden sind, und wenn ja, Wiederholen des Auswählens (708) einer Bounding-Box, der ein Maßpfeil zugeordnet ist, andernfalls Wiederholen des Auswählens (708) einer Bounding-Box, der ein Maßpfeil zugeordnet ist, und

Identifizieren (730) von Maßsätzen aus dem monochromatischen Bild nach Abtasten vertikaler und horizontaler Maßlinien.

2. Verfahren nach Anspruch 1, wobei das technische Dokument ein durchsuchbares Dokument oder ein nicht durchsuchbares Dokument ist.

3. Verfahren nach Anspruch 1 oder 2, wobei das Klassifizieren (210) des multimodalen Inhalts in dem technischen Dokument in eine oder mehrere vordefinierte Kategorien unter Verwendung des Modells für maschinelles Lernen Folgendes umfasst:

Parsen des technischen Dokuments unter Verwendung des einen oder der mehreren Modelle für maschinelles Lernen.

4. Verfahren nach einem der Ansprüche 1 bis 3, wobei der klassifizierte multimodale Inhalt eine Tabellenspalte umfasst und wobei das Extrahieren des klassifizierten multimodalen Inhalts von dem bestimmten Ort in dem technischen Dokument unter Verwendung der einen oder der mehreren trainierten Funktionen ferner Folgendes umfasst:

Identifizieren einer Struktur der Tabellenspalte unter Verwendung wenigstens einer morphologischen Operation;
Identifizieren von Zellen der Tabellenspalte unter Verwendung eines Konturdetektionsalgorithmus; und
Klassifizieren der Zellen der Tabellenspalte in Formel oder Text unter Verwendung der einen oder der mehreren trainierten Funktionen; und
Extrahieren der einen oder der mehreren Entitäten aus der Tabellenspalte unter Verwendung vordefinierter Funktionen auf der Grundlage der Klassifikation der Zellen.

5. Verfahren nach einem der Ansprüche 1 bis 4, das ferner Folgendes umfasst:

Trennen der orthogonalen Ansichten von den nichtgrafischen Informationen unter Verwendung der einen oder der mehreren trainierten Funktionen; und
Extrahieren der einen oder der mehreren Entitäten, die die orthogonalen Ansichten darstellen, aus dem technischen Dokument unter Verwendung eines Konturdetektionsalgorithmus.

6. Verfahren nach einem der Ansprüche 1 bis 5, wobei das Darstellen des extrahierten multimodalen Inhalts in dem durchsuchbaren Format Folgendes umfasst:

Bestimmen von Beziehungen zwischen den extrahierten einen oder mehreren Entitäten auf der Grundlage einer oder mehrerer Eigenschaften der Entitäten; und
Erzeugen eines Wissensmodells auf der Grundlage der extrahierten Entitäten und der Beziehungen zwischen den Entitäten.

7. Verfahren nach einem der Ansprüche 1 bis 6, das ferner Folgendes umfasst:

Empfangen einer Anforderung zum Abfragen der Darstellung des in der Datenbank (195) gespeicherten multimodalen Inhalts; und
Erzeugen einer Antwort auf die Anfrage durch Abfragen der Darstellung des in der Datenbank (195) gespeicherten multimodalen Inhalts.

8. Vorrichtung (105) zum Bereitstellen von Zugriff auf multimodalen Inhalt in einem technischen Dokument, wobei die Vorrichtung (105) Folgendes umfasst:

eine oder mehrere Verarbeitungseinheiten (120); und
eine Speichereinheit (125), die mit der einen oder den mehreren Verarbeitungseinheiten (120) kommunikationstechnisch gekoppelt ist, wobei die Speichereinheit (125) ein Wissensmanagementmodul (160) umfasst, das in Form maschinenlesbarer Anweisungen, die durch die eine oder die mehreren Verarbeitungseinheiten (120) ausführbar sind, gespeichert ist, wobei das Wissensmanagementmodul (160) konfiguriert ist, Verfahrensschritte nach einem der Ansprüche 1 bis 7 auszuführen.

9. System (100) zum Bereitstellen von Zugriff auf multimodalen Inhalt in einem technischen Dokument, wobei das System (100) Folgendes umfasst:

eine oder mehrere Client-Einrichtungen (110); und
eine Vorrichtung (105) nach Anspruch 10, die mit der einen oder den mehreren Client-Einrichtungen (110) kommunikationstechnisch gekoppelt ist, um aus technischen Dokumenten auf der Grundlage von Anforderungen, die von der einen oder den mehreren Client-Einrichtungen (110) empfangen werden, nach einem der Verfahrensansprüche 1 bis 7 Wissensmodelle zu erzeugen.

10. Computerprogrammprodukt, in dem maschinenlesbare Anweisungen gespeichert sind, die, wenn sie durch eine oder mehrere Verarbeitungseinheiten (120) ausgeführt werden, bewirken, dass die Verarbeitungseinheiten (120) ein Verfahren nach einem der Ansprüche 1 bis 7 durchführen.

**11.** Computerlesbares Speichermedium, das Anweisungen enthält, die, wenn sie durch eine oder mehrere Verarbeitungseinheiten (120) ausgeführt werden, bewirken, dass die eine oder die mehreren Verarbeitungseinheiten (120) ein Verfahren nach einem der Ansprüche 1 bis 7 durchführen.

**Revendications**

**1.** Procédé mis en œuvre par ordinateur pour fournir un accès à un contenu multimodal dans un document technique, le procédé comprenant les étapes suivantes :

recevoir (205), par une unité de traitement (120), une requête de fourniture d'accès au contenu multimodal du document technique, depuis une source (110) ;

classer (210) le contenu multimodal dans le document technique en une ou plusieurs catégories prédéfinies, correspondant au texte, à la colonne tabulaire, aux expressions mathématiques et aux dessins d'ingénierie, à l'aide d'un ou plusieurs modèles d'apprentissage automatique ;

déterminer (215) un emplacement du contenu multimodal classé dans le document technique ;

extraire (220) le contenu multimodal classé de l'emplacement déterminé du document technique à l'aide d'une ou plusieurs fonctions entraînées, où chaque fonction entraînée correspond à une catégorie spécifique du contenu multimodal en cours d'extraction,

représenter (225) le contenu multimodal extrait dans un format consultable ;

stocker (230) dans une base de données (195) la représentation du contenu multimodal extrait ; et

fournir accès (235) à la représentation du contenu multimodal dans le format consultable stocké dans la base de données (195), la fourniture de l'accès (235) comprenant la fourniture d'un fichier comprenant le contenu multimodal dans un format consultable sur un dispositif de sortie,

où le classement (210), la détermination (215) et l'extraction (220) d'entités dans le contenu multimodal dans le document technique correspondant à des dessins techniques comprennent les étapes suivantes :

convertir (605) le document technique en une image RVB,

classer (610) des entités comprenant des informations non graphiques, l'image RVB étant fournie en entrée dans un modèle d'apprentissage automatique, le modèle d'apprentissage automatique étant un modèle de segmentation d'image basé sur l'algorithme Mask R-CNN, le modèle d'apprentissage automatique produisant des valeurs de décalage correspondant à des régions d'intérêt associées aux informations non graphiques sur la base des valeurs de décalage, les informations non graphiques étant localisées à l'aide de boîtes de délimitation générées sur la base des valeurs de décalage,

extraire (615) des dimensions des dessins, par débruitage du document technique au moyen d'un algorithme de débruitage, effectuer une opération de seuillage sur l'image débruitée afin d'obtenir une image monochrome, tracer des lignes de cote et identifier des ensembles de dimensions à partir de l'image monochrome en utilisant un algorithme de suivi de lignes,

où le tracé de lignes de cote et l'identification d'ensembles de dimensions à partir de l'image monochrome à l'aide d'un algorithme de suivi de lignes comprennent les étapes suivantes :

générer (702) des valeurs de décalages à l'aide de l'algorithme Mask R-CNN correspondant aux pointes de flèches issues de l'image monochrome,

générer (704) des boîtes de délimitation à partir des valeurs de décalage,

déterminer (706) les centres qui correspondent à chacune des boîtes de délimitation,

sélectionner (708) une boîte de délimitation associée à une pointe de flèche,

choisir (710) une paire de coins adjacents de la boîte de délimitation sélectionnée,

déterminer (712, 714, 716) si un tracé horizontal ou un tracé vertical doit être effectué,

en cas de tracé horizontal, déterminer (714) un sens de parcours pour un tracé horizontal, et sélectionner (716, 718) le sens de parcours soit vers la gauche, soit vers la droite,

en cas de tracé vertical, déterminer (720) un sens de parcours pour un tracé vertical, et sélectionner (722, 724) le sens de parcours soit vers la gauche, soit vers la droite,

identifier (726) si d'autres coins adjacents sont présents dans l'image monochrome, et si oui, répéter la sélection (708) d'une boîte de délimitation associée à une pointe de flèche, sinon répéter la sélection (708) d'une boîte de délimitation associée à une pointe de flèche, et

identifier (730) des ensembles de dimensions à partir de l'image monochrome après traçage de lignes de cote verticales et horizontales.

**2.** Procédé selon la revendication 1, dans lequel le document technique est l'un d'un document consultable et d'un document non consultable.

**3.** Procédé selon la revendication 1 ou 2, dans lequel le classement (210) du contenu multimodal dans le document technique en une ou plusieurs catégories prédéfinies à l'aide du modèle d'apprentissage automatique comprend : l'analyse du document technique en utilisant les un ou plusieurs modèles d'apprentissage automatique.

**4.** Procédé selon l'une quelconque des revendications 1 à 3, dans lequel le contenu multimodal classé comprend une colonne tabulaire, et dans lequel l'extraction du contenu multimodal classé à partir de l'emplacement déterminé dans le document technique à l'aide des une ou plusieurs fonctions entraînées comprend en outre les étapes suivantes :

identifier une structure de la colonne tabulaire à l'aide d'au moins une opération morphologique ;
identifier des cellules de la colonne tabulaire à l'aide d'un algorithme de détection de contours ; et
classer les cellules de la colonne tabulaire en formule et en texte à l'aide des une ou plusieurs fonctions entraînées ; et
extraire les une ou plusieurs entités de la colonne tabulaire à l'aide de fonctions prédéfinies basées sur le classement des cellules.

**5.** Procédé selon l'une quelconque des revendications 1 à 4, comprenant en outre les étapes suivantes :

séparer les vues orthographiques des informations non graphiques à l'aide des une ou plusieurs fonctions entraînées ; et
extraire les une ou plusieurs entités représentant les vues orthographiques du document technique à l'aide d'un algorithme de détection de contour.

**6.** Procédé selon l'une quelconque des revendications 1 à 5, dans lequel la représentation du contenu multimodal extrait dans le format consultable comprend les étapes suivantes :

déterminer des relations entre les une ou plusieurs entités extraites sur la base des une ou plusieurs propriétés des entités ; et
générer un modèle de connaissance basé sur les entités extraites et les relations entre les entités.

**7.** Procédé selon l'une quelconque des revendications 1 à 6, comprenant en outre les étapes suivantes :

recevoir une requête d'interrogation de la représentation du contenu multimodal stocké dans la base de données (195) ; et
générer une réponse à la requête par interrogation de la représentation du contenu multimodal stocké dans la base de données (195).

**8.** Appareil (105) de fourniture d'accès à un contenu multimodal dans un document technique, l'appareil (105) comprenant :

une ou plusieurs unités de traitement (120) ; et
une unité de mémoire (125) couplée en communication aux une ou plusieurs unités de traitement (120), dans lequel l'unité de mémoire (125) comprend un module de gestion de connaissances (160) stocké sous la forme d'instructions lisibles par machine exécutables par les une ou plusieurs unités de traitement (120), dans lequel le module de gestion de connaissances (160) est configuré pour réaliser les étapes de procédé selon l'une quelconque des revendications 1 à 7.

**9.** Système (100) de fourniture d'accès à un contenu multimodal dans un document technique, le système (100) comprenant :

un ou plusieurs dispositifs clients (110) ; et
un appareil (105) selon la revendication 10, couplé de manière communicative aux un ou plusieurs dispositifs clients (110) pour générer des modèles de connaissances à partir de documents techniques sur la base de requêtes reçues des un ou plusieurs dispositifs clients (110) selon l'une quelconque des revendications de procédé 1 à 7.

**10.** Produit programme informatique dans lequel sont stockées des instructions lisibles par machine qui, lorsqu'elles sont exécutées par une ou plusieurs unités de traitement (120), amènent les unités de traitement (120) à exécuter un procédé selon l'une quelconque des revendications 1 à 7.

**11.** Support de stockage lisible par ordinateur comprenant des instructions qui, lorsqu'elles sont exécutées par une ou plusieurs unités de traitement (120), amènent les une ou plusieurs unités de traitement (120) à exécuter un procédé selon l'une quelconque des revendications 1 à 7.

FIG 1A

FIG 1B

FIG 2

200

205

210

215

220

225

230

235

FIG 3

FIG 4

400

```
┌─────────┐
│   405   │
└─────────┘
     │
     ▼
┌─────────┐
│   410   │
└─────────┘
     │
     ▼
┌─────────┐
│   415   │
└─────────┘
     │
     ▼
┌─────────┐
│   420   │
└─────────┘
     │
     ▼
┌─────────┐
│   425   │
└─────────┘
     │
     ▼
┌─────────┐
│   430   │
└─────────┘
     │
     ▼
┌─────────┐
│   435   │
└─────────┘
     │
     ▼
   ◇ 440 ◇ ──────► ┌─────────┐
     │             │   450   │
     ▼             └─────────┘
┌─────────┐
│   445   │
└─────────┘
```

# FIG 5A

505

| Graphical User Interface | | | — ▫ X |
|---|---|---|---|

File   Edit   View   Tools   Layout   Help

| AlexNet | Top-1 Err | Top-5 Err | Sparsity |
|---|---|---|---|
| Baseline | 42.8% | 19.79% | 0% |
| Sparse | 42.7% | 19.7% | 89% |
| DSD | 41.4% | 18.7% | 0% |
| Improvement (abs) | 1.4% | 1.0% | - |
| Improvement (rel) | 3.3% | 5.1% | - |

# FIG 5B

510

| AlexNet | Top-1 Err | Top-5 Err | Sparsity |
|---|---|---|---|
| Baseline | 42.8% | 19.79% | 0% |
| Sparse | 42.7% | 19.7% | 89% |
| DSD | 41.4% | 18.7% | 0% |
| Improvement (abs) | 1.4% | 1.0% | - |
| Improvement (rel) | 3.3% | 5.1% | - |

Graphical User Interface — ▢ X

File   Edit   View   Tools   Layout   Help

FIG 6

600

```
┌─────────────┐
│     605     │
└─────────────┘
       │
       ▼
┌─────────────┐
│     610     │
└─────────────┘
       │
       ▼
┌─────────────┐
│     615     │
└─────────────┘
       │
       ▼
┌─────────────┐
│     620     │
└─────────────┘
```

FIG 7A

700

702 → 704 → 706 → 708

726

710 → 712

714

720

724

722

718

716

FIG 7B

730

FIG 7C

# FIG 8A

800

# FIG 8B

805

# FIG 8C

810

Graphical User Interface    — ▢ X

File    Edit    View    Tools    Layout    Help

50.00

# FIG 8D

815

Graphical User Interface — 🗗 X

File    Edit    View    Tools    Layout    Help

FIG 9

900

905

910

915

920

# FIG 10

1000

1005

1010

# FIG 11

1100

A1

R1

R2

A2

A3

R3

R4

A4

A5

# FIG 12

1200

1205

1210

1215

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020160050 A1

**Non-patent literature cited in the description**

- A PROCEDURE OF READING MECHANICAL ENGINEERING DRAWINGS FOR CAD APPLICATIONS. **LIH-SHING KUNG et al.** SIGNAL PROCESSING. ELSEVIER SCIENCE PUBLISHERS B.V., 01 May 1993, vol. 32, 191-200

- A SYNTACTIC/GEOMETRIC APPROACH TO RECOGNITION OF DIMENSIONS IN ENGINEERING MACHINE DRAWINGS. **DOV DORI**. COMPUTER VISION GRAPHICS AND IMAGE PROCESSING. ACADEMIC PRESS, 01 September 1989, vol. 47, 271-291